# EUROPEAN PATENT SPECIFICATION

(11) **EP 0 698 447 B1**
(45) Date of publication and mention of the grant of the patent: **15.11.2000**
(21) Application number: 95305700.7
(22) Date of filing: 16.08.1995
(51) Int. Cl.: B24D 3/06, B24D 3/16

(54) **Abrasive body**
Schleifkörper
Corps abrasif

(30) Priority: 17.08.1994 ZA 9406208
(43) Date of publication of application: 28.02.1996
(73) Proprietor: DE BEERS INDUSTRIAL DIAMOND DIVISION (PROPRIETARY) LIMITED, Johannesburg 2001 (ZA)
(72) Inventor: Sigalas, Iacovos, Linden, Johannesburg (ZA); Roberts, Bronwyn Annette, Parkhurst, Johannesburg (ZA); Riedel, Ralph, D - 64832 Badenhausen (DE)
(74) Representative: Jones, Alan John

(56) References cited:
- EP-A- 0 372 382
- EP-A- 0 389 962
- EP-A- 0 406 847
- WO-A-92/10442
- WO-A-93/23794
- WO-A-94/25199
- FR-A- 2 197 829
- US-A- 5 215 942
- PATENT ABSTRACTS OF JAPAN vol. 13, no. 84 (C-572), 27 February 1989 & JP-A-63 270743 (SHOWA ELECTRIC WIRE & CABLE), 8 November 1988, & DATABASE WPI Section Ch, Week 8850 Derwent Publications Ltd., London, GB; Class AGL, AN 88-358585 (50) & JP-A-63 270 743 (SHOWA ELEC. WIRE K.K.) , 8 November 1988
- HERMAN F. MARK AND DONALD F. OTHMER (POL. INST. OF NEW YORK), CHARLES G. OVERBERGER (UNIV. MICHIGAN), GLENN T. SEABORG (UNIV. CA.): "ENCYCLOPEDIA OF CHEMICAL TECHNOLOGY" 1980 , THIRD EDITION . JOHN WILEY AND SONS , NEW YORK, NY, U.S.A. XP002006385 * volume 10, page 265, lines 18-44 * * volume 16, page 572, line 37 - page 573, line 9 *

## Description

### BACKGROUND OF THE INVENTION

This invention relates to abrasive bodies for use as wear parts, cutting tool inserts and the like.

Abrasive compacts are used extensively in cutting, milling, grinding, drilling and other abrasive operations. They generally contain ultrahard abrasive particles dispersed in a second phase matrix. The matrix may be metallic or ceramic. The ultrahard abrasive particles may be diamond or cubic boron nitride (CBN). These particles are known to bond to each other during the high pressure and high temperature compact manufacturing process generally used, forming a polycrystalline mass. The bodies so produced are thus also known as PCD or PCBN.

Examples of diamond and cubic boron nitride abrasive compacts are described in United States Patent Nos. 3,745,623; 3,767,371; 3,743,489; and 4,334,928.

For example, US Patent No 4,334,928 teaches a sintered compact for use in a tool consisting essentially of 80 to 20 volume percent of high pressure form boron nitride; and the balance being a matrix of at least one binder compound material selected from the group consisting of a carbide, a nitride, a carbonitride, a boride and a silicide of a IVa or a Va transition metal of the periodic table, mixtures thereof and their solid solution compounds; the matrix forming a continuous bonding structure in a sintered body and where the high pressure boron nitride is interspersed within a continuous matrix.

Refractory ceramics have been synthesised at relatively low temperatures and ambient pressures by pyrolysing organic precursors. Sintered ceramic bodies of various shapes may be produced by utilising this route. The following papers describe such processes:
1. Wright, J.K. and Evans, J.R.G., Br.Ceram. Trans. J., 89, 163-167, 1990.
2. Interrante L.V. et al, Mat. Res. Soc. Symp. Proc. Vol. 249, 31, 1992.
3. Paine R.T. et al, Polymer Preprints, Vol. 34 No. 1, 336, 1993.
4. Seyferth D. et al, J. Am. Ceram. Soc., 75(5), 1300, 1992.
5. Bouillon E. et al, J. of Mat. Sci., 26 1333, 1991.
6. Soraru G.D., et al, J. of Mat. Sci., 25, 3886, 1990.
7. Gilbert M. Brown and Leon Maya T., Amer. Ceram. Soc. 71, 78-82 (1988).

US-A-5 215 942 discloses a method of making a densified diamond-containing ceramic composite, comprising mixing diamond powder with a sol-gel solution of an organometallic precursor of a ceramic composition to produce a mixture; gelling the mixture to produce a wet, porous gel with diamond powder dispersed throughout the gel; drying the wet, porous gel at a temperature not to exceed the boiling point of liquids remaining in the gel to produce a stabilized porous composite; and heating the stabilized porous composite to produce a densified diamond-containing ceramic composite at a temperature sufficiently low substantially to prevent graphitization of the diamond.

Diamond grinding wheels comprising a mass of diamond particles dispersed in a ceramic matrix are also known in the art.

### SUMMARY OF THE INVENTION

According to the present invention, a method of manufacture of an abrasive body includes the steps of:
(i) providing a mixture comprising an organometallic polymer capable of being pyrolised to produce ceramic particles, and a mass of abrasive particles by:
   (a) milling an organometallic precursor of the polymer with the mass of abrasive particles, polymerising the precursor, and then milling the mixture; or
   (b) simultaneously mixing and polymerising an organometallic precursor of the polymer and the mass of abrasive particles, and then milling the mixture; or
   (c) milling the polymer with the mass of abrasive particles;
(ii) applying heat to the mixture to cause the polymer to pyrolise; and
(iii) sintering the pyrolised mixture into a coherent abrasive body.

### DESCRIPTION OF EMBODIMENTS

The sintered abrasive body manufactured by the method of the invention comprises abrasive particles dispersed in a second phase material. The second phase material is a ceramic, preferably a refractory ceramic. Examples of suitable ceramics are silicon carbide, silicon nitride, silicon carbonitride, boron nitride, boron carbide, aluminium nitride, tungsten carbide, titanium carbide, titanium nitride and generally various carbides, nitrides, borides of transition metals.

Adjacent abrasive particles are generally not bonded to each other, but are strongly bonded to the surrounding second phase material, which forms a continuous phase. The abrasive particles are preferably selected from the group including diamond and cubic boron nitride or mixtures thereof.

The sintered abrasive bodies produced are tough and wear-resistant and are suitable for use, for example, as wear-resistant surfaces such as bearing surfaces or as tool inserts. Where the abrasive particle is cubic boron nitride (CBN), the body can be used for cutting or machining ferrous alloys or ferrous nickel base alloys or nickel base superalloys. Where the abrasive particle is diamond, the body may be used in various cutting, machining and drilling applications in engineering and mining. For example, it may be used as the abrasion resistant, active cutting element in woodworking applications, or in the machining of aluminium silicon alloys, or in the machining of fibre reinforced polymer or metal matrix composites. Also, it may be used as the cutting or gauge keeping element in coring or oil drilling bits.

In step (i) of the method of the invention, there is provided a mixture comprising an organometallic polymer capable of being pyrolised to produce ceramic particles and a mass of abrasive particles. This may be achieved in various ways, as set out below:
1 The mixture in the form of a fine powder may be prepared by milling an organometallic precursor of the polymer with the mass of abrasive particles, polymerising the precursor, and then milling the mixture.
2 The mixture in the form of a fine powder may be prepared by simultaneously mixing and polymerising an organometallic precursor of the polymer and the mass of abrasive particles, and then milling the mixture.
3 The mixture in the form of a fine powder may be prepared by milling the polymer with the mass of abrasive particles.

The concentration of the abrasive particles in the mixture should be such that their concentration in the final sintered abrasive body is in the range from 30% to 90% inclusive by volume and preferably in the range of from 50% to 80% inclusive by volume.

The method of the invention may include a step, between step (i) and step (ii), of pressing the mixture of step (i) to form a green body for step (ii).

In step (ii) of the method of the invention, heat is applied to the mixture of step (i) or to the green body of the intermediate step, to cause the polymer to pyrolise.

In the pyrolisation step, the mixture may be heated to a temperature in the range of from 300°C to 1 000°C inclusive to cause decomposition of the polymer and to drive off gaseous by-products.

Step (ii) may be carried out in three stages:
(ii)(a) rapidly heating the mixture for example at a heating rate of up to 10°C per minute until the temperature reaches about 300°C;
(ii)(b) then slowly heating the mixture for example at a heating rate of from 10°C to 20°C inclusive per hour, when the temperature is between about 300°C and about 800°C; and
(ii)(c) then rapidly heating the mixture for example at a heating rate of up to 10°C per minute until the temperature reaches about 1 000°C.

The mixture may be held at the final temperature for a period of time to ensure pyrolysis of the polymer. For example, the mixture may be held at the final temperature for a period of four hours.

The reason for the variation in heating rates is that slow heating at intermediate temperatures is necessary since during the thermolysis of the green bodies, H₂, CH₄ and other volatiles evaporate mainly between 300°C and 800°C through the transient open porosity.

Step (ii) is preferably carried out in an inert atmosphere of nitrogen or a mixture thereof.

The result of step (ii) is ceramic particles in which the crystallite size may be of the order of 10-500 nanometres and with which the abrasive particles are intimately mixed. Such ceramic particles are usually characterised by a high surface area with a concomitant large activity.

In step (iii) of the method of the invention the pyrolised mixture is sintered into a coherent abrasive body.

The sintering of the mixture may cause surface impurities on the abrasive particles to be drawn off, increasing their propensity to bond with reaction sites in or on the ceramic particles.

Sintering of the ceramic/abrasive particle mixture generally takes place at a temperature between 1 000°C and 1 400°C inclusive. A temperature of between 1 000°C and 1 100°C inclusive is employed where the abrasive particles in the mixture are diamond. A temperature of between 1 000°C and 1 400°C inclusive is employed where the abrasive particles in the mixture are CBN.

The temperature used will determine the composition of the final sintered abrasive body. At the lower end of the sintering temperature scale an amorphous matrix is formed, while on the upper end of the scale a crystallised matrix is formed.

To increase the density of the abrasive body, sintering may be carried out under pressure. The pressure will generally not exceed 20kBar. The preferred pressure range is from 10Bar to 10kBar. The fact that relatively low pressure or even pressureless sintering may be used, provides an advantage over prior art processes. Where pressure is applied, after its application the content of the abrasive particles in the pressure sintered body may be as high as 90% by volume.

A preferred organometallic polymer for use in the method of the invention is a polymerised polyorganosilazane such as NCP200 (a product of Hoechst Aktiengesellschaft) which may be transformed to an amorphous silicon carbonitride ceramic matrix.

The invention will be illustrated by the following example:

### EXAMPLE 1

In this example polyorganosilazanes are transformed into amorphous silicon carbonitride ceramic matrixes. This ceramic matrix is generated by the polymer-to-ceramic conversion process denoted as hybrid processing.

In the first stage three different routes were investigated for providing a mixture comprising polysilazane and diamond or CBN abrasive particles:
(a) Ball milling of polysilazane NCP 200 doped with CBN or diamond. After polymerisation (also called cross-linking) additional ball milling was necessary to produce a fine composite powder.
(b) Simultaneous mixing and polymerisation of polysilazane NCP 200 and a mass of abrasive particles. Since NCP 200 becomes liquid and foams during polymerisation, the abrasive particles are homogeneously distributed within the polymer after polymerisation. Powders are produced by subsequent ball milling.
(c) Ball milling of polymerised NCP 200/abrasive particle mixtures.

Seeding particles such as Si₃N₄ or SiC may be added during the mixing stage.

The resultant powders were sieved through a 32µm screen and cold isostatically pressed at 630 MPa to obtain cylindrical green bodies.

Subsequently, the green bodies were subjected to thermal treatment under Ar. The heating schedule of the pyrolysis step was optimised with respect to the total processing time by using a high heating rate of 10°C per minute up to 300°C, a decelerated heating rate between 300°C and 800°C of from 10°C to 20°C per hour, and an accelerated heating rate up to 1 000°C of 10°C per minute. The isothermal hold at the final temperature was four hours. The slow heating at intermediate temperatures was necessary since during the thermolysis of the green bodies, H₂ and CH₄ evaporate mainly between 300°C and 800°C through the transient open porosity.

Thereafter the bodies were subjected to additional heat treatments between 1 100°C and 1 400°C to crystallise and sinter the ceramic matrix. Again, a temperature of between 1 000°C and 1 100°C was employed where the abrasive particles in the mixture were diamond, and a temperature of between 1 000°C and 1 400° was employed where the abrasive particles were CBN.

Since pure polysilazane-derived silicon carbonitride crystallises at temperatures greater than 1 400°C, the decrease of the onset of crystallisation in the presence of seeding particles such as Si₃N₄ or SiC was studied. Thus, two different ceramic composites were formed: diamond or CBN embedded in an amorphous Si-C-N matrix or diamond or CBN embedded in a polycrystalline Si₃N₄/SiC matrix.

## Claims

1. A method of manufacture of an abrasive body including the steps of:
(i) providing a mixture comprising an organometallic polymer capable of being pyrolised to produce ceramic particles, and a mass of abrasive particles by:
(a) milling an organometallic precursor of the polymer with the mass of abrasive particles, polymerising the precursor, and then milling the mixture; or
(b) simultaneously mixing and polymerising an organometallic precursor of the polymer and the mass of abrasive particles, and then milling the mixture; or
(c) milling the polymer with the mass of abrasive particles;
(ii) applying heat to the mixture to cause the polymer to pyrolise; and
(iii) sintering the pyrolised mixture into a coherent abrasive body.

2. A method according to claim 1 wherein in step (i) the concentration of the abrasive particles in the mixture is such that their concentration in the final coherent abrasive body is in the range of from 30% to 90% inclusive by volume.

3. A method according to claim 2 wherein in step (i) the concentration of the abrasive particles in the mixture is such that their concentration in the fmal coherent abrasive body is in the range of from 50% to 80% inclusive by volume.

4. A method according to any one of claims 1 to 3 wherein the method includes a step between step (i) and step (ii) of pressing the mixture of step (i) to form a green body for step (ii).

5. A method according to any one of claims 1 to 4 wherein in step (ii) the mixture is heated to a temperature in the range of from 300°C to 1 000°C inclusive to cause the polymer to pyrolise.

6. A method according to claim 5 wherein in step (ii) the heating is carried out in three stages:
(ii)(a) rapidly heating the mixture until the temperature reaches about 300°C;
(ii)(b) then slowly heating the mixture when the temperature is between about 300°C and about 800°C; and
(ii)(c) then rapidly heating the mixture until the temperature reaches about 1 000°C.

7. A method according to claim 5 or claim 6 wherein in step (ii) the mixture is held at the final temperature for a period of time to ensure pyrolysis of the polymer.

8. A method according to any one of claims 1 to 7 wherein in step (iii) the pyrolised mixture is sintered at a temperature of from 1 000°C to 1 400°C inclusive.

9. A method according to any one of claims 1 to 8 wherein in step (iii) the sintering is carried out under pressure.

10. A method according to any one of claims 1 to 9 wherein the abrasive particles are selected from the group consisting of diamond and cubic boron nitride and mixtures thereof.

11. A method according to any one of claims 1 to 10 wherein the ceramic produced is selected from the group consisting of silicon carbide, silicon nitride, silicon carbonitride, boron nitride, boron carbide, aluminium nitride, tungsten carbide, titanium carbide, titanium nitride, and carbides, nitrides and borides of transition metals.

12. A method according to any one of claims 1 to 11 wherein the organometallic polymer is a polymerised polyorganosilazane.

13. A composite abrasive body comprising a mass of abrasive particles dispersed in a ceramic matrix which body is characterised in that the abrasive particles comprise from 50% to 80% inclusive by volume of the composite abrasive body, the abrasive particles are bonded to the ceramic matrix which forms a continuous phase in the composite abrasive body, and the ceramic matrix is formed by the pyrolysis and subsequent sintering of a mixture comprising an organometallic polymer capable of being pyrolised to produce ceramic particles and the mass of abrasive particles, the mixture being provided by:
(a) milling an organometallic precursor of the polymer with the mass of abrasive particles, polymerising the precursor, and then milling the mixture; or
(b) simultaneously mixing and polymerising an organometallic precursor of the polymer and the mass of abrasive particles, and then milling the mixture; or
(c) milling the polymer with the mass of abrasive particles.

14. A composite abrasive body according to claim 13 wherein the abrasive particles are selected from the group consisting of diamond and cubic boron nitride and mixtures.

15. A composite abrasive body according to claim 13 or claim 14 wherein the ceramic matrix is selected from the group consisting of silicon carbide, silicon nitride, silicon carbonitride, boron nitride, boron carbide, aluminium nitride, tungsten carbide, titanium carbide, titanium nitride, and carbides, nitrides and borides of transition metals.

16. A composite abrasive body according to any one of claims 13 to 15 wherein the organometallic polymer is a polymerised polyorganosilazane.

## Patentansprüche

1. Verfahren zur Herstellung eines Schleifkörpers, das die Stufen:
(i) der Bereitstellung einer Mischung, umfassend ein metallorganisches Polymer, welches unter Bildung keramischer Teilchen pyrolysiert werden kann, und eine Masse von Schleifteilchen durch
(a) Mahlen einer metallorganischen Vorstufe des Polymers mit der Masse der Schleifteilchen, Polymerisation der Vorstufe und anschließendes Mahlen der Mischung; oder
(b) gleichzeitiges Mischen und Polymerisieren einer metallorganischen Vorstufe des Polymers und der Masse der Schleifteilchen, und anschließendes Mahlen der Mischung; oder
(c) Mahlen des Polymers mit der Masse der Schleifteilchen;
(ii) des Erwärmens der Mischung, um eine Pyrolyse des Polymers zu verursachen; und
(iii) des Sinterns der pyrolysierten Mischung zu einem kohärenten Schleifkörper
umfaßt.

2. Verfahren gemäß Anspruch 1, worin im Schritt (i) die Konzentration der Schleifteilchen in der Mischung derartig ist, daß ihre Konzentration in dem fertigen Schleifkörper im Bereich von 30 % bis einschließlich 90 Vol.-% liegt.

3. Verfahren gemäß Anspruch 2, worin im Schritt (i) die Konzentration der Schleifteilchen in der Mischung derartig ist, daß ihre Konzentration in dem fertigen, kohärenten Schleifkörper im Bereich von 50 % bis einschließlich 80 Vol.-% liegt.

4. Verfahren gemäß irgendeinem der Ansprüche 1 bis 3, worin das Verfahren zwischen dem Schritt (i) und dem Schritt (ii) einen Schritt des Pressens der Mischung des Schritts (i) einschließt, um einen Grünkörper für Schritt (ii) zu bilden.

5. Verfahren gemäß irgendeinem der Ansprüche 1 bis 4, worin im Schritt (ii) die Mischung auf eine Temperatur im Bereich von 300 °C bis einschließlich 1000 °C erwärmt wird, um eine Pyrolyse des Polymers zu verursachen.

6. Verfahren gemäß Anspruch 5, worin im Schritt (ii) das Erwärmen in drei Schritten durchgeführt wird:
(ii) (a) schnelles Erwärmen der Mischung, bis die Temperatur etwa 300 °C erreicht;
(ii) (b) dann langsames Erwärmen der Mischung, wenn die Temperatur zwischen etwa 300 °C und etwa 800 °C liegt;
(ii) (c) dann schnelles Erwärmen der Mischung, bis die Temperatur etwa 1000 °C erreicht.

7. Verfahren gemäß Anspruch 5 oder Anspruch 6, worin im Schritt (ii) die Mischung bei der endgültigen Temperatur während einer Zeitspanne gehalten wird, um die Pyrolyse des Polymers zu gewährleisten.

8. Verfahren gemäß irgendeinem der Ansprüche 1 bis 7, worin im Schritt (iii) die pyrolysierte Mischung bei einer Temperatur von 1000 °C bis einschließlich 1400 °C gesintert wird.

9. Verfahren gemäß irgendeinem der Ansprüche 1 bis 8, worin im Schritt (iii) das Sintern unter Druck durchgeführt wird.

10. Verfahren gemäß irgendeinem der Ansprüche 1 bis 9, worin die Schleifteilchen aus der aus Diamant und kubischem Bornitrid und deren Mischungen bestehenden Gruppe ausgewählt ist.

11. Verfahren gemäß irgendeinem der Ansprüche 1 bis 10, worin die hergestellte Keramik aus der aus Siliciumcarbid, Siliciumnitrid, Siliciumcarbonitrid, Bornitrid, Borcarbid, Aluminiumnitrid, Wolframcarbid, Titancarbid, Titannitrid und Carbiden, Nitriden und Boriden von Übergangsmetallen bestehenden Gruppe ausgewählt ist.

12. Verfahren gemäß irgendeinem der Ansprüche 1 bis 11, worin das metallorganische Polymer ein polymerisiertes Polyorganosilazan ist.

13. Verbund-Schleifkörper, umfassend eine Masse von Schleifteilchen, die in einer keramischen Matrix dispergiert sind, wobei der Körper dadurch gekennzeichnet ist, daß die Schleifteilchen 50 bis einschließlich 80 Vol.-% des Verbund-Schleifkörpers umfassen, die Schleifteilchen an die keramische Matrix gebunden sind, welche eine kontinuierliche Phase in dem Verbund-Schleifkörper bildet, und die keramische Matrix durch die Pyrolyse und das anschließende Sintern einer Mischung gebildet wird, die ein metallorganisches Polymer, das befähigt ist, unter Bildung von keramischen Teilchen pyrolysiert zu werden, und die Masse der Schleifteilchen umfaßt, wobei die Mischung durch
(a) Mahlen einer metallorganischen Vorstufe des Polymers mit der Masse der Schleifteilchen, Polymerisation der Vorstufe und anschließendes Mahlen der Mischung; oder
(b) gleichzeitiges Mischen und Polymerisieren einer metallorganischen Vorstufe des Polymers und der Masse der Schleifteilchen, und anschließendes Mahlen der Mischung; oder
(c) Mahlen des Polymers mit der Masse der Schleifteilchen; bereitgestellt wird.

14. Verbund-Schleifkörper gemäß Anspruch 13, worin die Schleifteilchen aus der aus Diamant und kubischem Bornitrid und Mischungen bestehenden Gruppe ausgewählt sind.

15. Verbund-Schleifkörper gemäß Anspruch 13 oder Anspruch 14, worin die keramische Matrix aus der aus Siliciumcarbid, Siliciumnitrid, Siliciumcarbonitrid, Bornitrid, Borcarbid, Aluminiumnitrid, Wolframcarbid, Titancarbid, Titannitrid und Carbiden, Nitriden und Boriden von Übergangsmetallen bestehenden Gruppe ausgewählt ist.

16. Verbund-Schleifkörper gemäß irgendeinem der Ansprüche 13 bis 15, worin das metallorganische Polymer ein polymerisiertes Polyorganosilazan ist.

## Revendications

1. Un procédé de fabrication d'un corps abrasif comprenant les étapes consistant à :
(i) prévoir un mélange comprenant un polymère organométallique capable d'être pyrolysé pour produire des particules de céramique et une masse de particules abrasives par :
(a) broyage d'un précurseur organométallique du polymère avec la masse de particules abrasives, polymérisation du précurseur, et ensuite broyage du mélange ; ou
(b) mélange simultané et polymérisation d'un précurseur organométallique du polymère et de la masse de particules abrasives, et ensuite broyage du mélange ; ou
(c) broyage du polymère avec la masse de particules abrasives ;
(ii) appliquer de la chaleur au mélange pour provoquer la pyrolyse du polymère ; et
(iii) fritter le mélange pyrolysé selon un corps abrasif cohérent.

2. Un procédé selon la revendication 1, dans lequel, dans l'étape (i), la concentration des particules abrasives dans le mélange est telle que leur concentration dans le corps abrasif cohérent final se situe dans la gamme de 30 % à 90 % en volume, bornes comprises.

3. Un procédé selon la revendication 2, dans lequel, dans l'étape (i), la concentration des particules abrasives dans le mélange est telle que leur concentration dans le corps abrasif cohérent final se situe dans la gamme de 50 % à 80 % en volume, bornes comprises.

4. Un procédé selon l'une quelconque des revendications 1 à 3, dans lequel le procédé comprend une étape entre l'étape (i) et l'étape (ii) de pressage du mélange de l'étape (i) pour former un corps vert pour l'étape (ii).

5. Un procédé selon l'une quelconque des revendications 1 à 4, dans lequel, dans l'étape (ii), le mélange est chauffé à une température comprise dans la gamme de 300°C à 1000°C, bornes comprises, pour provoquer la pyrolyse du polymère.

6. Un procédé selon la revendication 5, dans lequel, dans l'étape (ii), le chauffage est mis en oeuvre en trois étapes :
(ii)(a) en chauffant rapidement le mélange jusqu'à ce que la température atteigne environ 300°C ;
(ii)(b) en chauffant ensuite lentement le mélange lorsque la température se situe entre environ 300°C et environ 800°C ; et
(ii)(c) en chauffant ensuite rapidement le mélange jusqu'à ce que la température atteigne environ 1000°C.

7. Un procédé selon la revendication 5 ou la revendication 6, dans lequel, dans l'étape (ii), le mélange est maintenu à la température finale pendant une période de temps pour assurer la pyrolyse du polymère.

8. Un procédé selon l'une quelconque des revendications 1 à 7, dans lequel, dans l'étape (iii), le mélange pyrolysé est fritté à une température de 1000°C à 1400°C, bornes comprises.

9. Un procédé selon l'une quelconque des revendications 1 à 8, dans lequel, dans l'étape (iii), le frittage est mis en oeuvre sous pression.

10. Un procédé selon l'une quelconque des revendications 1 à 9, dans lequel les particules abrasives sont choisies parmi le groupe comprenant le diamant et le nitrure de bore cubique et leurs mélanges.

11. Un procédé selon l'une quelconque des revendications 1 à 10, dans lequel la céramique produite est choisie parmi le groupe comprenant le carbure de silicium, le nitrure de silicium, le carbonitrure de silicium, le nitrure de bore, le carbure de bore, le nitrure d'aluminium, le carbure de tungstène, le carbure de titane, le nitrure de titane et les carbures, nitrures et borures de métaux de transition.

12. Un procédé selon l'une quelconque des revendications 1 à 11, dans lequel le polymère organométallique est un polyorganosilazane polymérisé.

13. Un corps abrasif composite comprenant une masse de particules abrasives dispersées dans une matrice de céramique, lequel corps est caractérisé en ce que les particules abrasives renferment de 50 % à 80 % en volume, bornes comprises, du corps abrasif composite, les particules abrasives sont reliées à la matrice céramique qui forme une face continue dans le corps abrasif composite et la matrice céramique est formée par la pyrolyse et le frittage subséquent d'un mélange comprenant un polymère organométallique capable d'être pyrolysé pour produire des particules céramiques et la masse des particules abrasives, le mélange étant obtenu par :
(a) broyage d'un précurseur organométallique du polymère avec la masse de particules abrasives, polymérisation du précurseur, et ensuite broyage du mélange ; ou
(b) mélange simultané et polymérisation d'un précurseur organométallique du polymère et la masse de particules abrasives, et ensuite broyage du mélange ; ou
(c) broyage du polymère avec la masse de particules abrasives.

14. Un corps abrasif composite selon la revendication 13, dans lequel les particules abrasives sont choisies parmi le groupe comprenant le diamant et le nitrure de bore cubique et leurs mélanges.

15. Un corps abrasif composite selon la revendication 13 ou la revendication 14, dans lequel la matrice céramique est choisie parmi le groupe comprenant le carbure de silicium, le nitrure de silicium, le carbonitrure de silicium, le nitrure de bore, le carbure de bore, le nitrure d'aluminium, le carbure de tungstène, le carbure de titane, le nitrure de titane et les carbures, nitrures et borures de métaux de transition.

16. Un corps abrasif composite selon l'une quelconque des revendications 13 à 15, dans lequel le polymère organométallique est un polyorganosilazane polymérisé.
